**Europäisches Patentamt**

(19) **European Patent Office**

**Office européen des brevets**

(11) Publication number: **0 034 435**
A2

(12) # EUROPEAN PATENT APPLICATION

(21) Application number: **81300445.4**

(22) Date of filing: **03.02.81**

(51) Int. Cl.³: **B 62 D 33/08**
**B 62 D 63/06, B 60 P 3/34**

(30) Priority: **04.02.80 GB 8003662**

(43) Date of publication of application:
**26.08.81 Bulletin 81/34**

(84) Designated Contracting States:
**AT BE CH DE FR GB IT LI LU NL SE**

(71) Applicant: **EQUESTRIAN TRANSPORT LIMITED**
**31 Copthall Avenue**
**London EC2R 7BP(GB)**

(72) Inventor: **Bullock, Alan John**
**Portridge House Old Burghclere**
**Near Newbury Berkshire RG15 9NH(GB)**

(72) Inventor: **Watson, Norman Frederick**
**Chippings Scatterdells Lane**
**Chipperfield Hertfordshire(GB)**

(74) Representative: **Carpmael, John William Maurice et al,**
**CARPMAELS & RANSFORD 43 Bloomsbury Square**
**London, WC1A 2RA(GB)**

(54) **Extendable load carrying vehicle.**

(57) A wheeled vehicle having a traditional box-type body (9) defining a load space, and a storage space (15) on one or both sides of the vehicle separate from the load space, at least one door (19) of which forms part of supplementary accommodation which can be erected on the side of the vehicle. The door (19) folds down over the side face of the wheels (7) and there are two side wall portions (21,23) within the storage space (15) which are foldable in two about a horizontal axis, and which are foldable outwardly from the storage space to form side walls. A front wall portion is connectable between the front ends of the side walls (21,23) and is comprised of a frame (41), panels (43) and a door. A flexible roof or cover (35) is stretched across the top of the side walls (21,23).

While the vehicle is designed for use as mobile stabling, it may have many other uses.

FIG. 3

## "WHEELED VEHICLE"

This invention relates to a wheeled vehicle which is convertible from an "on the road", i.e. folded up, condition to a condition of use, wherein the vehicle provides (and occupies) considerably more space than when in the "on the road" condition.    Although the invention is particularly suited to trailers, it is also applicable to semi-trailers, i.e. the rear end of an articulated vehicle, or to self-propelled vehicles.

With the increase in time now available for leisure activities, there are now more and more sporting events, shows and other occasions where participants, competitors or spectators wish to spend more than just a few hours away from home, and they therefore wish to have a mobile base in which they can live, house their animals, display their goods, entertain, or store their equipment, whether it be horses in the case of equestrian events, or racing cars or cycles in the case of a motor racing meeting, or which they can, for example, convert into a mobile showroom.

The present invention has been evolved to meet this requirement for mobile storage or accommodation, and while not so limited, has been specially developed to provide mobile stabling for horses at equestrian shows, three-day events, and the like.

In the equestrian world, it is often necessary for those competitors attempting to get to the top of their chosen sport to spend days away from home with their horses, but with the increasing popularity of the sport, temporary stabling for horses has become very scarce, and hence very expensive.    Furthermore, what temporary stabling is available is sometimes of a very low standard, and of course, when horses are stabled in strange stables there is always the risk of the horses picking up various equestrian diseases.    This can have very undesirable consequences.

According to the broadest aspect of the present invention, therefore, we provide a wheeled vehicle having a body thereon defining a permanent load space, and on at least one side of the vehicle, two side wall portions and a lower closure panel which are attached to the side of the vehicle and/or stored within a storage space separate from the load space, there being a lower wall portion foldably connected to each side wall portion, the side wall portions being movable to extended positions projecting laterally from the side of the vehicle at the front and rear of the body and the lower wall portions being folded down to a position wherein their free edges are on or adjacent the ground, and the lower closure panel being movable to a position extending between the side wall portions and at least substantially closing off the space between the lower edge of the body and the ground and obscuring the wheels of the vehicle, whereby supplementary accommodation or space against the side of the vehicle is provided.

Preferably, the lower closure panel is hingedly connected to the side of the vehicle body at or adjacent its lower edge, about a horizontal axis, and when in an upper position, partly closes off a storage space in the side of the vehicle and when folded downwardly through 180°, it will provide a wall between the ground and vehicle body, overlying the side face of wheels of the vehicle.    Preferably, each of the side wall portions is stored in the space, and these are preferably hingedly connected to the vehicle body about generally vertical axes, one at or adjacent each end of the body.  A ground engaging foot or bolt may be provided on the outer lower corner of each lower wall portion which is connected to these side wall portions.

Preferably, the vehicle is provided with such a storage space on each side, so that supplementary accommodation or space can be provided against both sides of the vehicle.

Preferably, the vehicle includes further wall portions for providing the front wall of the supplementary accommodation on the or each side of the vehicle, frame members for a roof and a flexible cover.

In one construction, the or each side wall of the vehicle is provided with an upper door hingedly connected to the wall of the vehicle about its upper generally horizontal edge and movable outwardly to provide a rigid roof portion and the flexible cover is secured in known manner, e.g. with zips, lacing, hooks and eyes, or the like to the free edge of the rigid roof portion, and to the top edge of each side wall portion, which preferably slopes down towards its front.

In a preferred construction, the vehicle does not have an upper door for closing off the or each storage space, and this may be closed off, for "on the road" condition, in other known manner, e.g. with flexible side screens. In this construction, it is preferred that a panel be provided above the or each storage space, upstanding from the body of the vehicle at its side edge, and extending the full length of the body, said panel(s) being contoured, e.g. convexly curved along its top edge, to provide a roof frame member, and that further roof members of similar outline to said panel be provided for fitting between the top edges of the side wall portions, over which a flexible cover, i.e. of canvas or plastics material, can be stretched and secured in position as described above.

If desired, the front wall portions may be kept in the storage space, and when required these would be assembled between the front edges of the side wall portions. They may comprise frame members, panels and at least one stable door.

Especially if the vehicle is designed to provide mobile stabling, the various wall portions are preferably made of hard wearing material, such as plastic laminate coated marine ply, which cannot be damaged by horses' hooves, and can easily be kept clean.

When used as stabling, the front wall may be formed with two stable doors therein, in which case, a partition may be provided, which divides the supplementary accommodation into two stables.

Preferably, a door is provided in the front and/or the rear wall of the vehicle. If a door is not provided in the rear wall, part of the rear wall may be folded downwardly to provide a ramp into the load space.

A preferred embodiment of the present invention is now described by way of example with reference to the accompanying drawings, in which:-

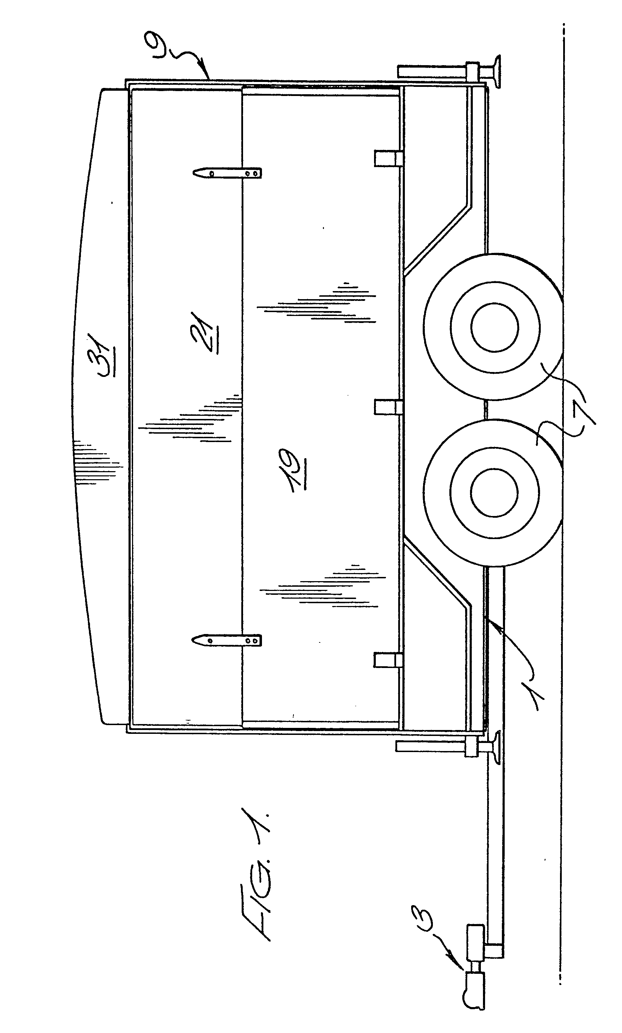

FIGURE 1 is a side elevation of a trailer designed for use as mobile stabling and showing the trailer in its "on the road" condition;

FIGURE 2 is a side view showing the trailer in a condition in which stabling has been erected on one side thereof, and

FIGURE 3 is a rear view showing the trailer with the stabling erected.

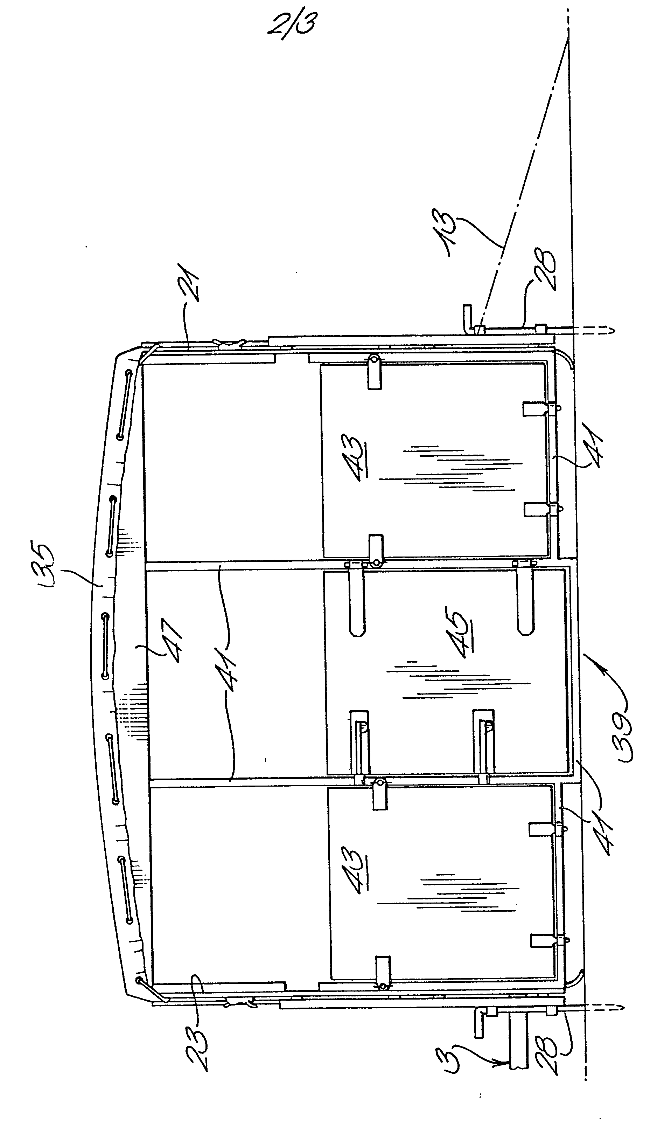

Referring to the drawings, the trailer has a chassis 1 terminating at its front end in a towbar 3 on which a platform may be provided, there being the usual standard road wheels 7 supported on the chassis in known manner. Supported on the chassis 1 is a body 9 which may be made largely in traditional manner after the style of a box van. Within the body 9 is a traditional load space which typically has internal measurements approximately 10ft. long, 6ft. wide and about 7ft. high. A door 11 is provided in the rear wall of the trailer body which is foldable downwardly in known manner to provide an access ramp 13 (see Figure 2). It will of course be appreciated that the door 11 and ramp 13 could be replaced with alternative means of access to the load space.

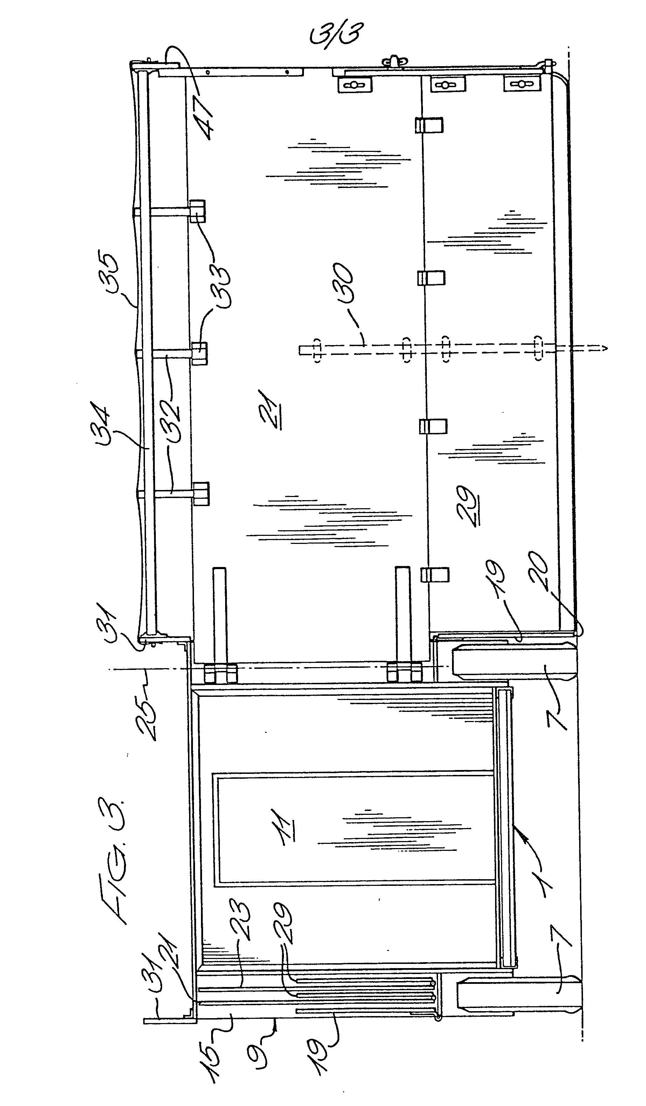

On each side of the trailer (although it is envisaged that it may be provided on only one side) is a storage space 15 which may be closed off by an upper door hingedly connected to the top of the side wall of the vehicle and by a closure panel in the form of a lower door 19 hingedly connected about its bottom edge to the side of the vehicle at a location just above a wheel arch, into which the wheels 7 are recessed. However, it is preferably closed off by a full height/length flexible screen, either alone or in conjunction with the door 19. In any event, the height of the lower door 19 is such that when folded downwardly through 180° to the position shown on the right hand side of Figure 3, its upper edge 20 will rest upon or be spaced slightly from the ground and the door will bridge the space between the trailer frame 1 and the ground so as to provide a wall portion completely obscuring the wheels 7.    Suitable means may be provided to lock the door against the body 9 in this open position.

The storage space 15 has a depth sufficient to store a pair of side walls and perhaps also a flexible roof portion and/or a front wall and/or optionally a divider wall therein.    Accordingly, two side wall portions 21, 23 are hingedly connected about vertical axes 25 located just within the storage space 15, one at each end, each wall portion 21 and 23 having a length such that it forms a close fit within the storage space 15.

To erect the mobile stabling, a lower wall portion 29 hingedly connected to the bottom edge of each side wall portion 21, 23, is folded downwardly through 180°, whereupon each side wall portion 21, 23 is folded outwardly through 90° to the position shown in Figure 3, so that the portions 21 and 29 and 23 and 29 respectively provide the two full height side walls of the stabling. A suitable extendable bolt or anchor leg 28 is provided on the outer lower corner of each wall portion 29 so as to support the outer edge of the side walls if the ground is not level and to anchor the side walls to the ground.    A central anchoring device 30 may also be provided.

Along the top edge at each side of the body, an upstanding panel 31 is provided, each panel having a convexly curved top edge.    Three similarly shaped roof beams 32, which can be stored either in the load space or one of the storage spaces 15, are provided, and once the side wall portions 21, 23 have been moved to their extended positions (Figures 2 & 3), these can be located in parallel spaced relationship in brackets 33 on the top of the portions 21 and 23, so as to provide a roof frame between the two side walls of the accommodation. These are braced by a central strut 34 extending between the panel 31 and the front of the accommodation. To complete the roof, a flexible cover 35 which may be formed of canvas, plastics material or the like is located over the roof frame and is secured to the top edge of the panel 31 and front and side walls, for example by means of suitable eyes engaging with hooks or by using rope or zippers or by any other known manner.

In one alternative construction, when an upper door is provided for closing off the storage space 15, the upper edge of each side wall portion 21, 23 is inclined downwardly towards its front and while the side walls are being folded out and erected, the upper door must be opened outwardly and upwardly. Once the side walls have been erected, the upper door can be allowed to rest on the inclined edge of each side wall to act as a portion of the roof of the stabling. To complete the roof, a flexible cover may be fixed in position over the remaining roof space, in the manner described above.

The front of the stabling is completed with a front wall 39, the parts of which are taken from the storage spaces and/or load space 15 and are then assembled either during or before placing in position between the front edges of the two side walls. The front wall is made up of suitable frame members 41, which fit together to provide a frame for two panels 43 and a stable door 45. The panels 43 and door 45 are easily fixed in position and drop into place on suitable brackets and hinges provided on the frame. In turn, the frame is easily connected by quick assembly connections between the front edges of the two side walls. A front roof beam 47 extends across the top of the frame and the roof cover 35 is connected to this, as is the strut 34.

If desired, the stabling may be divided into two by means of a divider wall which can be suitably slotted in position between the trailer body 9 and the front wall 39. In this case, the construction of the front wall 39 could incorporate two doors.

The door 19, the side wall portions 21, 23 and 29, the front wall 39 and any other rigid panel or wall which is provided are formed of a durable material which will not be damaged when kicked by horses and which is generally weather-resistant, and a particularly suitable material is a plastics laminate coated marine ply.

The load space within the body of the trailer can be fitted out as desired. For example, it may be fitted out as a tack room and/or as living accommodation and/or as a traditional horse box. In any event, the load space would have permanently durable walls as distinct from collapsible walls for the stabling.

The above-described mobile stabling would not need planning permission and can therefore be erected temporarily at any desired location. This means that at three-day events and like equestrian meetings, horse owners need not worry about stabling when they are miles from home since they can take their own. What is more, the stabling can be used as a quarantine stable and can be erected at the owners home at a location remote from the permanent stabling so as to isolate a sick horse or horses from other healthy animals.

Although the above description has been specifically directed to mobile stabling, it will be appreciated that the wheeled vehicle disclosed could have many other uses, in which case of course the front wall 39 would be modified. The vehicle could, for example, be used as a mobile showroom for use on showgrounds, the "stable" areas on one or both sides being used as supplementary space for showing off or demonstrating goods or equipment which, during transit, would be stored in the load space. During the show this load space could then be used as an office or as living accommodation. The vehicle could of course be used as an "extendable" shop or motor racing or motor cycling enthusiasts could use the vehicle as a mobile garage and workshop. For example, the supplementary space on one side of the vehicle could be used for servicing racing machines, whereas the other side could be used for entertaining.

If the supplementary space is used as a mobile trade stand, then access from the supplementary space on the side of the vehicle to the interior of the body may be provided. This may be in the form of one or more serving hatches or doors, e.g. of the stable type.

In some cases, it may be desirable to provide a winch on the vehicle for winching racing machines or other vehicles into the load space for transit.

Of course, the front wall 39 does not have to be erected, in which case the supplementary space could be used as a stall for selling or displaying goods.     It will also be appreciated that the flexible roof cover 35 could be replaced by a rigid roof, e.g. made in more than one section, but in most instances this would be too heavy and unwieldly.

Preferably, the vehicle would be provided as a towed vehicle in order to keep down costs, but it is envisaged that the invention could be incorporated in a self-propelled or semi-trailed vehicle.

CLAIMS

1. A wheeled vehicle having a body (9) thereon defining a permanent load space, and on at least one side of the vehicle, two side wall portions (21,23) and a lower closure panel (19) which are attached to the side of the vehicle and/or stored within a storage space (15) separate from the load space, there being a lower wall portion (29) foldably connected to each side wall portion (21,23), the side wall portions (21,23) being movable to extended positions projecting laterally from the side of the vehicle at the front and rear of the body and the lower wall portions (29) being folded down to a position wherein their free edges are on or adjacent the ground, and the lower closure panel (19) being movable to a position extending between the side wall portions (21,23) and at least substantially closing off the space between the lower edge of the body and the ground and obscuring the wheels (7) of the vehicle, whereby supplementary accommodation or space against the side of the vehicle is provided.

2. A vehicle according to claim 1 wherein the lower closure panel (19) is hingedly connected to the side of the vehicle body (9) at or adjacent its lower edge, about a horizontal axis, and when in an upper position, partly closes off a storage space (15) in the side of the vehicle and when folded downwardly through 180°, it will provide a wall between the ground and vehicle body, overlying the side face of wheels (7) of the vehicle.

3. A vehicle according to claim 1 or 2 wherein each of the side wall portions (21,23) is stored in the space (15), and wherein said portions (21,23) are hingedly connected to the vehicle body (9) about generally vertical axes (25), one at or adjacent each end of the body (9) and are foldable outwardly through 90°.

4. A vehicle according to any one of claims 1-3 wherein a ground engaging foot or bolt (28) is provided on the outer lower corner of each lower wall portion (29).

5. A vehicle according to any one of claims 1-4 and including further wall portions (41,43,45) for providing the front wall of the supplementary accommodation on the or each side of the vehicle, frame members (32,47) for a roof and a flexible cover (35).

6. A vehicle according to any one of claims 1-6 wherein a panel (31) is provided above the or each storage space (15), upstanding from the body (9) of the vehicle at its side edge, and extending the full length of the body, said panel(s) (31) providing a roof frame member, and wherein further roof members (32) of similar outline to said panel (31) are provided for fitting between the top edges of the side wall portions (21,23), over which a flexible cover (35) can be stretched and secured in position to provide a roof.

7. A vehicle according to any one of the preceding claims wherein a front wall portion (Fig.2) is connectable between the front edges of the side wall portions (21,23).

8. A vehicle according to claim 7 wherein the front wall portion comprises frame members (41), panels (43) and at least one stable door (45).

9. A vehicle according to any one of claims 1-8 wherein the various wall portions are made of plastic laminate coated marine ply.

10. A vehicle according to any one of the preceding claims wherein a door (11) is provided in the front and/or the rear wall of the vehicle.

FIG. 1.

0034435

FIG. 3.